# FASCICULE DE BREVET EUROPEEN

(11) **EP 1 524 743 B1**
(45) Date de publication et mention de la délivrance du brevet: **01.02.2012**
(21) Numéro de dépôt: 04105015.4
(22) Date de dépôt: 13.10.2004
(51) Int. Cl.: H02B 11/24, H02B 1/06

(54) **Compartiment et cellule de distribution de moyenne et/ou haute tension**
Aufnahmeraum und Mittel- und/oder Hochspannungszelle
Compartment and mid- and/or hight voltage cell

(30) Priorité: 16.10.2003 FR 0312109
(43) Date de publication de la demande: 20.04.2005
(73) Titulaire: Schneider Electric Energy France, 92500 Rueil Malmaison (FR)
(72) Inventeur: Pillon, Eric, 71960, PRISSE (FR)
(74) Mandataire: Poulin, Gérard

(56) Documents cités:
- DE-B- 1 221 338
- FR-A- 2 237 339
- GB-A- 442 960
- GB-A- 2 338 600

## Description

L'invention concerne un compartiment d'une cellule de distribution de moyenne et/ou haute tension ainsi que la cellule elle-même.

Plus précisément, l'invention concerne un compartiment incluant une cellule de distribution de moyenne et/ou haute tension comportant une broche apte à être raccordée à un réseau de moyenne et/ou haute tension, un transformateur de moyenne et/ou haute tension, un connecteur électrique mobile apte à établir une connexion électrique entre ladite broche et le transformateur, lequel connecteur est déplaçable entre une position active dans laquelle le connecteur raccorde électriquement ladite broche et le transformateur, et une position rétractée dans laquelle le connecteur isole électriquement le transformateur de ladite broche, un orifice d'accès à ladite broche et une unité de déplacement du connecteur de sa position active à sa position rétractée une paroi de protection placée entre le transformateur et la broche dan laquelle est ménagée l'orifice d'accès à ladite broche, le connecteur étant monté déplaçable dans l'orifice d'accès entre la position active et la position rétractée.

Ces compartiments sont utilisés dans ces cellules de distribution de moyenne et/ou haute tension. Par moyenne tension, on désigne des tensions 15 comprises entre I kV et 50 kV, par haute tension, des tensions supérieures à 50 kV, et. par basse tension des tensions inférieures à 1kV.

Un type de cellules connues comporte typiquement plusieurs compartiments disposés adjacents les uns aux autres. Le compartiment inférieur comporte trois broches de raccordement à un réseau de distribution de moyenne tension triphasée et trois transformateurs propres à transformer la moyenne tension en une basse tension raccordée à chacune de ces broches par l'intermédiaire de fusibles respectifs.

Pour des raisons de maintenance du transformateur et du fusible, il est nécessaire d'avoir accès à ces éléments. A cet effet, dans les compartiments connus, le transformateur et le fusible sont montés sur un même équipage mobile déplaçable entre une position active dans laquelle le transformateur est raccordé électriquement à la broche de raccordement par l'intermédiaire du fusible et une position rétractée dans laquelle le transformateur et le fusible sont électriquement isolés de cette broche.

En position active, le fusible solidaire de l'équipage mobile est en contact électrique avec la broche. Ainsi, le déplacement de l'équipage mobile vers la position rétractée écarte ce fusible de la broche et isole donc électriquement le transformateur de la moyenne tension. Ce fusible joue ainsi le rôle d'un connecteur. Toutefois, dans les compartiments connus, ce déplacement du fusible vers la position rétractée, libère un orifice d'accès à la broche et donc à la moyenne tension.

De manière à prévenir tout risque d'accès à cette broche au travers de cet orifice d'accès laissé libre en position rétractée, les compartiments connus comportent un mécanisme d'obstruction de cet orifice actionné automatiquement par le déplacement de l'équipage mobile vers sa position rétractée. Plus précisément, ce mécanisme d'obstruction déplace un volet qui vient obstruer l'orifice d'accès laissé libre par le connecteur. Ce mécanisme d'obstruction est typiquement réalisé à l'aide de bielles et biellettes. Ce mécanisme est complexe.

Le document GB 442 960 divulgue un compartiment d'une cellule de distribution de moyenne et/ou haute tension du type de celle décrite en préambule de la revendication 1.

L'invention vise à proposer un compartiment de cellule de distribution dans lequel le mécanisme pour interdire l'accès à la moyenne tension pendant des opérations de maintenance est simplifié.

L'invention a donc pour objet un compartiment de cellule de distribution tel que décrit ci-dessus caractérisé en ce que le connecteur comporte un tube en matériau électriquement isolant dont la périphérie extérieure de ce tube est ajustée au diamètre de l'orifice d'accès de manière à ce que le jeu ménagé entre la paroi et la périphérie extérieure du tube soit suffisamment petit pour empêcher tous accès à la broche lorsque le connecteur est en position rétractée.

Le connecteur est conformé pour obstruer l'orifice d'accès, lorsqu'il est en position rétractée. Dans le compartiment ci-dessus, le connecteur reste engagé dans l'orifice d'accès même pendant les opérations de maintenance. Ainsi, c'est le connecteur lui-même qui joue le rôle dévolu au volet dans les compartiments connus en obstruant l'orifice d'accès, Il n'est dès lors plus nécessaire de prévoir un mécanisme d'obstruction à volet. Suivant d'autres caractéristiques du compartiment, celui-ci se caractérise en ce que :
- un mécanisme de retenue propre à maintenir le connecteur dans l'orifice d'accès lorsque le connecteur est dans la position rétractée est présent.
- l'unité de déplacement est adaptée pour déplacer le connecteur vers une position rétractée dans laquelle le connecteur est isolé électriquement à la fois de ladite broche et dudit transformateur ;
- il comporte une borne de masse placée de manière à raccorder automatiquement le connecteur à la masse lorsque ce connecteur est dans sa position rétractée ;
- le connecteur comporte un premier contact propre à être raccordé à ladite broche et un second contact propre à être raccordé au transformateur, et en ce que les premier et second contacts sont électriquement raccordés par l'intermédiaire d'un élément fusible ;
- le connecteur comporte un tube en matériau électriquement isolant servant de support mécanique pour les premier et second contacts, et en ce que la périphérie extérieure de ce tube est adaptée à la section de l'orifice d'accès de manière à interdire tout accès à ladite broche à partir de l'espace où se situe le transformateur ;
- le connecteur comporte une collerette en matériau électriquement isolant, dont la périphérie est plus large que la section intérieure de l'orifice d'accès, et en ce que cette collerette est fixée sur une portion du connecteur de manière à ce que celle-ci vienne en butée contre la paroi de séparation lorsque le connecteur est en position rétractée,
- il comporte un équipage mobile apte à déplacer le transformateur indépendamment du connecteur, entre une position de fonctionnement dans laquelle le transformateur est susceptible d'être raccordé à ladite broche par l'intermédiaire du connecteur, et une position extraite dans laquelle le transformateur est électriquement isolé de ladite broche. Ce déplacement a pour but d'extraire cet équipage mobile du compartiment inférieur de la cellule de distribution de moyenne et/ou haute tension afin de pouvoir changer facilement le transformateur.

L'invention a également pour objet une cellule de distribution de moyenne et/ou haute tension destinée à être raccordée à un réseau de distribution électrique de moyenne et/ou haute tension, caractérisée en ce qu'elle comporte au moins un compartiment conforme à l'une quelconque des revendications précédentes.

L'invention sera mieux comprise à la lecture de la description qui va suivre donnée uniquement à titre d'exemple et faite en se référant aux dessins sur lesquels :
- la figure 1 est une vue chématique en coupe verticale d'une cellule de distribution de tension conforme à l'invention, et
- les figures 2 et 3 sont des illustrations schématiques en coupe verticale partielle d'un compartiment de la cellule de distribution de la figure 1 conforme à l'invention respectivement dans une position active et dans une position rétractée.

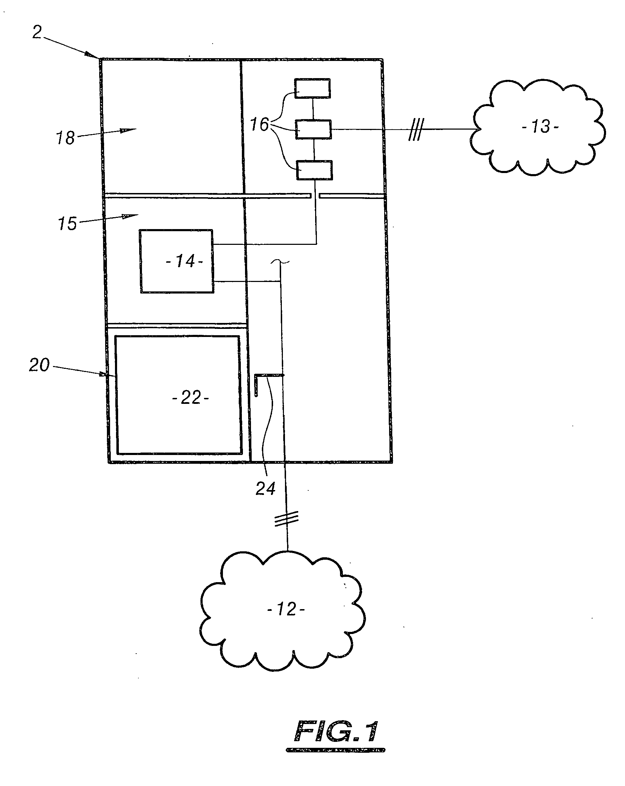

La figure 1 représente une cellule de distribution 2 destinée à isoler électriquement un premier réseau 12 de distribution de moyenne tension triphasée d'un second réseau 13 de distribution de moyenne tension triphasée.

A cet effet, la cellule 2 comporte un disjoncteur 14 propre à isoler électriquement le réseau 12 du réseau 13, soit sous la commande d'un opérateur, soit automatiquement en cas de détection d'un défaut. Ce disjoncteur est raccordé dans sa partie inférieure au réseau 12 tandis que dans sa partie supérieure, il est raccordé à des barres en cuivre 16 elles-mêmes raccordées au réseau 13 par l'intermédiaire d'autres équipements non représentés.

Ce disjoncteur 14 est logé dans un compartiment 15 placé à mi-hauteur de la cellule 2.

La cellule 2 comporte également un compartiment supérieur 18 et un compartiment inférieur 20.

Le compartiment 18 est appelé compartiment basse tension et comporte différents appareils électriques alimentés en basse tension.

Le compartiment 20, appelé compartiment de connexion de câble comporte trois broches 24, et un caisson 22 de transformation. Chacune des broches est raccordée à une phase du réseau 12. A titre d'illustration, seule une de ces broches est représentée.

Ici le caisson 22 comporte trois transformateurs, c'est-à-dire un par phase. Toutefois, dans la suite de la description, seul le mécanisme de connexion/déconnexion d'un des transformateurs du compartiment 20 sera décrit en détail. En effet, l'enseignement donné ci-dessous se généralise aisément à un nombre quelconque de transformateurs et de phases.

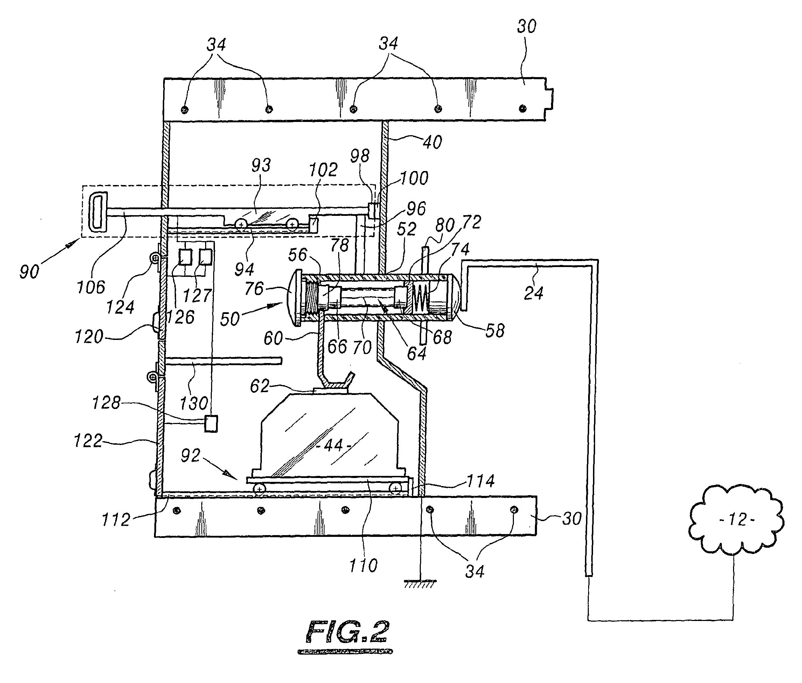

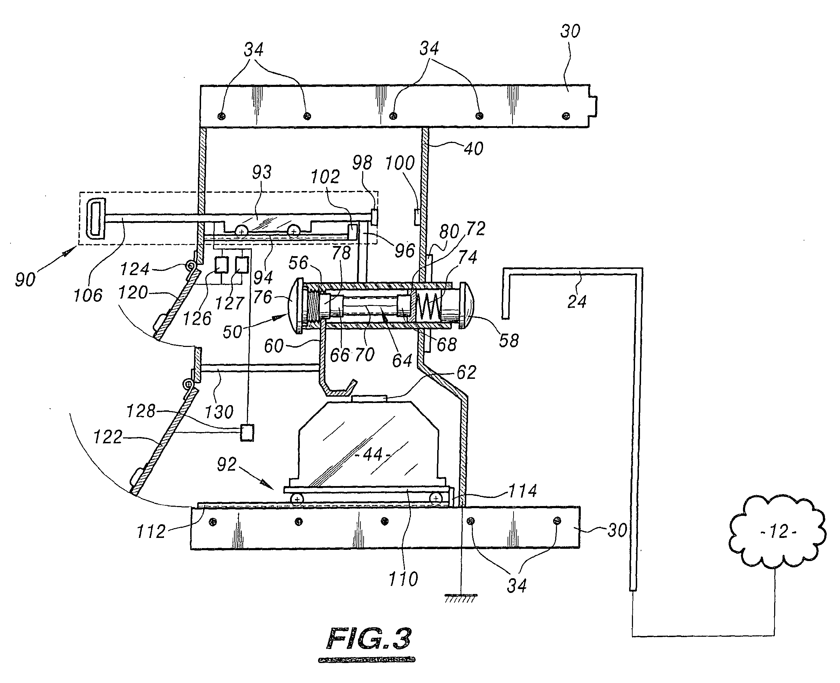

Les figures 2 et 3 représentent une coupe partielle selon un plan vertical du compartiment 20. Pour simplifier ces figures 2 et 3, seules certaines parties sont hachurées.

Le caisson 22 est délimité en haut et en bas par un châssis 30 fixé à l'armoire 2 à l'aide de moyens de fixation tels que des rivets 34.

La partie arrière du caisson 22 est formée par une paroi 40 sensiblement verticale placée entre les transformateurs et les broches. Cette paroi 40 est, soit en matériau isolant, soit en matériau métallique raccordé à masse. La paroi 40 est solidaire du châssis 30.

A l'intérieur du caisson 22 seul un transformateur électrique 44 de moyenne tension a été représenté. Ce transformateur fait typiquement de 20 à 40 cm de haut, de 14 à 20 cm de large et de 15 à 25 cm de long.

Ce transformateur 44 est propre à convertir la moyenne tension en une basse tension.

La basse tension délivrée par ce transformateur est, par exemple, destinée à alimenter les appareils contenus dans le compartiment 18. Ce transformateur peut également être utilisé en tant qu'appareil de mesure propre à délivrer un signal proportionnel à la moyenne tension délivrée par le réseau 12.

A cet effet, en position active, le transformateur 44 est raccordé électriquement d'un côté à la broche 24 par l'intermédiaire d'un connecteur 50 et de l'autre côté à des câbles d'alimentation des appareils du compartiment 18.

Le connecteur 50 est le seul élément du compartiment 20 apte à assurer une liaison électrique entre l'intérieur du caisson 22 et la broche 24. Pour cela, le connecteur 50 est engagé dans un orifice d'accès circulaire 52 ménagé dans la paroi 40.

Plus précisément, le connecteur 50 présente une portion centrale tubulaire et des extrémités faisant saillies de part et d'autre de la paroi 40.

La portion centrale est formée d'un tube creux 56 en matériau isolant. Ce tube 56 est monté à coulissement à l'intérieur de l'orifice 52. La périphérie extérieure de ce tube 56 est ajustée au diamètre de l'orifice 52 de manière à ce que le jeu ménagé entre la paroi 40 et la périphérie extérieure du tube 56 soit suffisamment petit pour empêcher tout accès à la broche 24 à partir de l'intérieur du caisson 22 tout en permettant au connecteur 50 de coulisser en translation horizontale à travers la paroi 40.

A l'intérieur de l'extrémité ouverte du tube 56 située en regard de la broche 24, est engagé à coulissement un contact électrique allongé 58. La partie proximale de ce contact électrique est retenue à l'intérieur du tube 56 par un système de butées non représenté. La partie distale de ce contact 58 est destinée à toucher la broche 24.

L'autre extrémité du tube 56 située dans le caisson 22 comporte un autre contact électrique 60. Ce contact 60 a la forme d'une crosse dont la hampe s'étend verticalement vers le bas et dont l'extrémité recourbée est adaptée pour venir en contact avec une borne de connexion 62 du transformateur 44.

Les contacts 58 et 60 sont électriquement raccordés l'un à l'autre par l'intermédiaire d'un fusible 64 destiné à protéger le transformateur 44 contre des défauts électriques tels que des court-circuits.

Le fusible 64 est logé à l'intérieur du tube 56.

Le fusible 64 a la forme d'un cylindre dont chaque extrémité 66, 68 est recouverte d'un revêtement conducteur. Ces extrémités 66, 68 sont électriquement raccordées par l'intermédiaire d'un élément fusible 70 tel qu'un fil.

L'extrémité 68 du fusible 64 est électriquement raccordée au contact 58 par l'intermédiaire d'une lame conductrice 72 sollicitée contre l'extrémité 68 par un ressort 74 interposé entre la lame 72 et le contact 58. Le ressort 74 est en matériau électriquement conducteur et permet donc de maintenir un contact électrique entre le contact 58 et le fusible 64.

L'extrémité 66 du fusible 64 est électriquement raccordée au contact 60 par l'intermédiaire d'un capuchon 76.

Le capuchon 76 est vissé à l'intérieur du tube 56. A cet effet, l'extrémité ouverte du tube 56 située dans le compartiment 38 et le capuchon 76 comportent des parties filetées correspondantes.

La partie filetée du capuchon 76 se termine par une cale métallique 78 destinée à repousser l'extrémité 66 du fusible 64.

La partie supérieure de la hampe du contact 60 est agencée de manière à être électriquement en contact avec la cale métallique 78 du capuchon 76 lorsque celui-ci est vissé à l'intérieur du tube 56.

Proche du contact 58, le connecteur 50 comporte une collerette circulaire 80 en matériau isolant. Le diamètre extérieur de cette collerette 80 est choisi supérieur à celui de l'orifice 52 et de préférence supérieur de 1, 2 ou 5 centimètres. La position exacte de cette collerette 80 est choisie pour que lorsque le connecteur 50 est en position rétractée, celle-ci vienne en butée contre la paroi 40 (figure 3).

Le caisson 22 comporte aussi une unité 90 de déplacement du connecteur 50 ainsi qu'un équipage mobile 92 apte à déplacer le transformateur 44.

L'unité 90 est de préférence commune à l'ensemble des connecteurs du caisson 22 tandis que l'équipage mobile 92 est également commun à l'ensemble des transformateurs du caisson 22 de manière à les déplacer simultanément.

L'unité 90 est formée d'un chariot mobile 93, guidé en translation horizontale par un rail fixe 94. Le connecteur 50 est fixé au chariot mobile 93 par une tige verticale 96.

L'extrémité droite du chariot 93 comporte une butée 98 destinée à venir en contact contre un méplat 100 solidaire de la paroi 40 lorsque le connecteur 50 est en position active.

L'unité 90 comporte également une butée 102 propre à limiter le déplacement du chariot 93 vers la gauche. Plus précisément, la position de cette butée 102 est choisie pour que lorsque le connecteur 50 est en position rétractée, celui-ci reste engagé dans l'orifice 52. Ici, la butée 102 est fixée à l'extrémité droite du rail 94.

La butée 102 forme un mécanisme de retenue du connecteur 50 dans l'orifice d'accès 52 lorsque celui-ci est en position rétractée.

L'extrémité gauche du chariot 93 est raccordée à une poignée 106 qui fait saillie à l'extérieur du caisson 22. Cette poignée est destinée à être manipulée par un technicien pour déplacer le chariot 93 entre ces deux positions extrêmes définies respectivement par la butée 102 et le méplat 100.

Le rail 94 est solidaire du châssis 30.

Lorsque le connecteur 50 est dans la position rétractée, l'équipage mobile 92 est apte à déplacer le transformateur 44 entre une position de fonctionnement dans laquelle la borne 62 est susceptible d'être électriquement raccordée au contact 60, et une position extraite de la cellule dans laquelle le transformateur 44 peut être retiré du caisson 22 et du compartiment 20. Ce déplacement a pour but d'extraire cet équipage mobile du compartiment inférieur de la cellule de distribution de moyenne et/ou haute tension afin de pouvoir changer facilement le transformateur. L'équipage mobile 92 comporte à cet effet un chariot 110 guidé en translation horizontale par un rail 112. Le rail 112 est fixé sur la partie inférieure du châssis 30. L'extrémité droite du rail 112 forme une surface d'appui 114 propre à immobiliser le chariot 110 et le transformateur 44 dans la position de fonctionnement.

La paroi du caisson 22 accessible par un technicien, appelée paroi avant, c'est-à-dire ici la paroi située à gauche, comporte une porte 120 d'accès au connecteur 50 ainsi qu'une trappe 122. Cette paroi avant est solidaire du châssis 30.

La porte 120 est montée sur une charnière 124 fixée sur la paroi avant. Cette porte 120 est montée déplaçable entre une position fermée dans laquelle l'accès au connecteur 50 n'est pas possible et une position ouverte permettant d'accéder au connecteur 50 pour le remplacement du fusible 64.

La porte 120 est associée à un mécanisme 126 de verrouillage de cette porte en position fermée lorsque le connecteur 50 est en position active. Ce mécanisme 126 est, par exemple, commandé en fonction de la position du chariot 93 de manière à déverrouiller automatiquement la porte 120 lorsque le connecteur 50 est en position rétractée.

De même, la porte 120 est associée à un mécanisme 127 de verrouillage de la position du chariot 93 en butée sur la butée 102 lorsque la porte 120 est ouverte et de verrouillage de la position du chariot 93 en butée sur le méplat 100 lorsque la porte 120 est fermée. Ce mécanisme 127 empêche notamment que le technicien de maintenance puisse repousser le connecteur 50 dans sa position active lors du remplacement du fusible.

De tels mécanismes de verrouillages sont connus et ceux-ci ne seront pas décrits ici plus en détail.

La trappe 122 est située à l'extrémité gauche du rail 112. Cette trappe 122 est adaptée pour permettre le retrait du transformateur 44 du caisson 22.

La trappe 122 est également associée à un mécanisme 128 de verrouillage de cette trappe en position fermée lorsque le connecteur 50 est en position active, et de déverrouillage de cette même trappe lorsque le connecteur 50 est en position rétractée. Le mécanisme 128 est, par exemple, similaire au mécanisme 126. Il est utilisé pour verrouiller et déverrouiller automatiquement la trappe 122.

Le caisson 22 comporte aussi une borne de masse 130 de telle manière que le contact 60 vienne automatiquement en appui sur cette borne 130 lorsque le connecteur 50 est en position rétractée.

Le fonctionnement du compartiment 20 va maintenant être décrit en regard des figures 2 et 3.

Pour passer de la position active représentée sur la figure 2 à la position rétractée représentée sur la figure 3, le technicien chargé de la maintenance tire la poignée 106 vers l'extérieur du caisson 22. Le chariot 93 se déplace alors vers la gauche jusqu'à ce que la tige 96 vienne en butée sur la butée 102. Le connecteur est alors dans sa position rétractée. Dans cette position rétractée, le contact 58 est séparé de la broche 24 par une distance suffisante pour assurer une bonne tenue en tension. Le connecteur est également isolé de la borne de connexion 62.

Dans cette position rétractée, la collerette 80 est également en butée contre la paroi 40 et le contact 60 est en contact avec la borne de masse 130. Dans cette position la collerette empêche l'apparition d'arcs électriques.

Ainsi, en une seule opération, le technicien isole le transformateur 44 du réseau 12 et isole le connecteur 50 à la fois du réseau 12 et du transformateur 44. De plus ici, le connecteur 50 est aussi mis automatiquement à la masse lors de la même opération par l'intermédiaire de la borne 130.

Le déplacement du connecteur 50 vers sa position rétractée commande le déverrouillage automatique de la porte 120 et de la trappe 122 par les mécanismes 126 et 128.

Ensuite, le technicien ouvre la porte 120 et dévisse le capuchon 76. Le connecteur 50 est alors automatiquement bloqué dans sa position rétractée par le mécanisme 127.

Le technicien remplace alors, par exemple, le fusible 64 par un nouveau fusible.

Une fois les opérations de maintenance du fusible terminées, le technicien revisse le capuchon 76 de manière à ce qu'il exerce une poussée vers la droite sur le fusible 64 qui vient alors à son tour comprimer le ressort 74. Le ressort 74 pousse alors le contact 58 vers l'extérieur du tube 52. Le fusible 64 est alors maintenu coincé entre d'une part la lame 72 et d'autre part la cale métallique 78.

Le technicien peut également procéder aux opérations de maintenance du transformateur 44 lorsque le connecteur 50 est dans sa position rétractée. Typiquement, le technicien déplace à l'aide de l'équipage mobile 92 le transformateur 44 vers sa position extraite de la cellule. Ensuite il ouvre la trappe 122 et extrait le transformateur 44 pour effectuer à l'extérieur du caisson 22 et du compartiment 20 les opérations de maintenance de celui-ci.

Une fois ces opérations de maintenance terminées, le technicien repose le transformateur 44 sur le chariot 110 et pousse ce chariot 110 vers la droite jusqu'à ce que celui-ci vienne en appui sur la surface d'appui 114. Le transformateur 44 est alors de nouveau prêt à être utilisé.

Une fois que toutes les opérations de maintenance ont été terminées et que la porte 120 et la trappe 122 sont fermées, le technicien déplace le connecteur 50 vers sa position active en enfonçant la poignée 90 vers l'intérieur du caisson 22.

Lors de ce déplacement, le contact 58 touche en premier la broche 24. Tant que le chariot 93 n'est pas en butée sur le méplat 100, la partie proximale du contact 58 s'enfonce à l'intérieur du tube 52 en comprimant leur ressort 74. Ainsi, la présence du ressort 74 permet de compenser l'existence éventuelle d'un jeu entre la broche 24 et le connecteur 50 lorsque ce dernier est en position active.

Lorsque le chariot 93 entre en butée contre le méplat 100, sa position est verrouillée par le mécanisme 127 pour empêcher tout déplacement accidentel du connecteur 50.

Dans cette position le connecteur 50 est de nouveau dans sa position active et le compartiment 20 est prêt à fonctionner.

Le système de la figure 2 présente de nombreux avantages. En particulier, pour remplacer le fusible 64, il n'est plus nécessaire de déplacer le transformateur 44 ce qui limite le volume de dégagement à prévoir pour le remplacement du fusible 64.

L'équipage mobile 92 a pour unique fonction de déplacer le transformateur 44. Cet équipage mobile peut donc être simplifié et allégé

Le compartiment a été décrit dans le cas particulier où un équipage mobile 92 permet de déplacer le transformateur 44. Toutefois en variante, cet équipage mobile 92 peut être supprimé et le transformateur 44 sera alors simplement posé sur la partie inférieure du châssis 30.

Le connecteur 50 a été décrit dans le cas particulier où il comporte une collerette 80. Toutefois cette collerette 80 est, en variante, supprimée.

## Revendications

1. Compartiment d'une cellule de distribution de moyenne et/ou haute tension comportant :
- une broche (24) apte à être raccordée à un réseau de moyenne et/ou haute tension,
- un transformateur (44) de moyenne et/ou haute tension,
- un orifice (52) d'accès à ladite broche, et
- une unité (90) de déplacement du connecteur (50) de sa position active à sa position rétractée,
- un connecteur électrique (50) mobile apte à établir une connexion électrique entre ladite broche (24) et le transformateur (44), lequel connecteur (50) est déplaçable entre une position active dans laquelle le connecteur raccorde électriquement ladite broche et le transformateur, et une position rétractée dans laquelle le connecteur isole électriquement le transformateur de ladite broche,
- une paroi de protection (40) placée entre le transformateur (44) et la broche (24) dans laquelle est ménagé l'orifice d'accès (52) à ladite broche (24), le connecteur (50) étant monté déplaçable dans l'orifice d'accès (52) entre la position active et la position rétractée,
**caractérisé en ce que** :
- le connecteur (50) comporte un tube (56) en matériau électriquement isolant dont la périphérie extérieure de ce tube (56) est ajustée au diamètre de l'orifice d'accès (52) de manière à ce que le jeu ménagé entre la paroi (40) et la périphérie extérieure du tube (56) soit suffisamment petit pour empêcher tout accès à la broche (24), lorsque le connecteur (50) est en position rétractrée.

2. Compartiment selon la revendication 1, comprenant un mécanisme de retenue (102) propre à maintenir le connecteur (50) dans l'orifice d'accès (52) lorsque le connecteur est dans la position rétractée.

3. Compartiment selon l'une quelconque des revendications précédentes, **caractérisé en ce que** l'unité de déplacement (90) est adaptée pour déplacer le connecteur (50) vers une position rétractée dans laquelle le connecteur (50) est isolé électriquement à la fois de ladite broche (24) et dudit transformateur (44).

4. Compartiment selon l'une quelconque des revendications précédentes, **caractérisé en ce qu'**il comporte une borne de masse (130) placée de manière à raccorder automatiquement le connecteur (50) à la masse lorsque ce connecteur est dans sa position rétractée.

5. Compartiment selon l'une quelconque des revendications précédentes, **caractérisé en ce que** le connecteur (50) comporte un premier contact (58) propre à être raccordé à ladite broche (24) et un second contact (60) propre à être raccordé au transformateur (44), et **en ce que** les premier et second contacts sont électriquement raccordés par l'intermédiaire d'un élément fusible (70).

6. Compartiment selon la revendication 5, **caractérisé en ce que** le tube (56) en matériau électriquement isolant du connecteur (50) sert de support mécanique pour les premier et second contacts.

7. Compartiment selon l'une quelconque des revendications précédentes, **caractérisé en ce que** le connecteur (50) comporte une collerette (80) en matériau électriquement isolant, dont la périphérie est plus large que la section intérieure de l'orifice d'accès (52), et **en ce que** cette collerette (80) est fixée sur une portion du connecteur (50) de manière à ce que celle-ci vienne en butée contre la paroi (40) lorsque le connecteur est en positon rétractée.

8. Compartiment selon l'une quelconque des revendications précédentes, **caractérisé en ce qu'**il comporte un équipage mobile (92) apte à déplacer le transformateur (44) indépendamment du connecteur (50), entre une position de fonctionnement dans laquelle le transformateur est susceptible d'être raccordé à ladite broche (24) par l'intermédiaire du connecteur (50), et une position extraite dans laquelle le transformateur (44) est électriquement isolé de ladite broche (24).

9. Cellule de distribution de moyenne et/ou haute tension destinée à être raccordée entre un réseau (12) de distribution électrique de moyenne et/ou haute tension, **caractérisée en ce qu'**elle comporte au moins un compartiment (20) conforme à l'une quelconque des revendications précédentes.

## Claims

1. Medium and/or high voltage distribution cubicle compartment including:
- a pin (24) adapted to be connected to a medium and/or high voltage network,
- a medium and/or high voltage transformer (44),
- an orifice (52) providing access to said pin, and
- a unit (90) for displacement of the connector (50) from its active position to its retracted position,
- a mobile electrical connector (50) adapted to setting up an electrical connection between said pin (24) and the transformer (44), said connector (50) being moving between an active position in which the connector electrically connects said pin and the transformer, and a retracted position in which the connector electrically isolates the transformer from said pin,
- a protection wall (40) placed between the transformer (44) and the pin (24) in which the access orifice (52) to said pin (24) is formed, the connector (50) being installed free to move in the access orifice (52) between the active position and the retracted position,
**characterised in that**:
- the connector (50) comprises a tube (56) made of an electrically insulating material which external periphery of this tube (56) is fitted to the cross-section of the access orifice (52) such that the clearance formed between the wall (40) and the outside periphery of the tube (56) is sufficiently small to prevent any access to the pin (24), when the connector (50) is in the retracted position.

2. Compartment according to claim 1, comprising a retaining mechanism (102) capable of holding the connector (50) in place in the access orifice (52) when the connector is in the retracted position.

3. Compartment according to any one of the above claims, **characterised in that** the displacement unit (90) is adapted to move the connector (50) to a retracted position in which the connector (50) is electrically isolated both from said pin (24) and from said transformer (44).

4. Compartment according to any one of the above claims, **characterised in that** it comprises an earthing terminal (130) placed so as to automatically connect the connector (50) to the ground when this connector is in its retracted position.

5. Compartment according to any one of the above claims, **characterised in that** the connector (50) comprises a first contact (58) that can be connected to said pin (24) and a second contact (60) that can be connected to the transformer (44), and **in that** the first and second contacts are electrically connected through a fuse element (70).

6. Compartment according to claim 5, **characterised in that** the tube (56) made of an electrically insulating material acts as a mechanical support for the first and second contacts .

7. Compartment according to any one of the above claims, **characterised in that** the connector (50) comprises a collar (80) made of an electrically insulating material, in which the periphery is wider than the inside section of the access orifice (52), and **in that** this collar (80) is fixed on a portion of the connector (50) so that this portion of the connector stops in contact with the wall (40) when the connector is in the retracted position.

8. Compartment according to any one of the above claims, **characterised in that** it comprises a mobile assembly (92) that can move the transformer (44) independently of the connector (50), between an operating position in which the transformer can be connected to said pin (24) through the connector (50), and an extracted position in which the transformer (44) is electrically isolated from said pin (24).

9. Medium and / or high voltage distribution cubicle that will be connected to a medium and / or high voltage electrical distribution network (12), **characterised in that** it comprises at least once compartment (20) according to any one of the above claims.

## Patentansprüche

1. Aufnahmeraum einer Mittel- und/oder Hochspannungsverteilungszelle, enthaltend:
- einen Dorn (24), der dazu geeignet ist, an ein Mittel- und/oder Hochspannungsnetz angeschlossen zu werden,
- einen Mittel- und/oder Hochspannungstransformator (44),
- eine Zugangsöffnung (52) zu dem Dorn und
- eine Einheit (90) zum Verlagern des Verbinders (50) aus seiner aktiven Stellung in seine zurückgezogene Stellung,
- einen beweglichen elektrischen Verbinder (50), der dazu geeignet ist, eine elektrische Verbindung zwischen dem Dorn (24) und dem Transformator (44) herzustellen, welcher Verbinder (50) zwischen einer aktiven Stellung, in welcher der Verbinder den Dorn elektrisch mit dem Transformator verbindet, und einer zurückgezogenen Stellung verschiebbar ist, in welcher der Verbinder den Transformator elektrisch von dem Dorn trennt,
- eine Schutzwand (40), die zwischen Transformator (44) und Dorn (24) eingesetzt ist, in welche die Zugangsöffnung (52) zum Dorn (24) ausgerührt ist, wobei der Verbinder (50) in der Zugangsöffnung (52) zwischen der aktiven Stellung und der zurückgezogenen Stellung verschiebbar eingebaut ist,
**dadurch gekennzeichnet, dass**
- der Verbinder (50) ein Rohr (56) aus elektrisch isolierendem Material aufweist, bei dem der Außenumfang dieses Rohres (56) auf den Durchmesser der Zugangsöffnung (52) so angepasst ist, dass das zwischen Wand (40) und Außenumfang des Rohres (56) gebildete Spiel klein genug ist, um jeglichen Zugang zu dem Dorn (24) dann zu verhindern, wenn der Verbinder (50) in einer zurückgezogenen Stellung ist.

2. Aufnahmeraum nach Anspruch 1, enthaltend einen Rückhaltemechanismus (102), der dazu geeignet ist, den Verbinder (50) dann in der Zugangsöffnung (52) zu halten, wenn der Verbinder in der zurückgezogenen Stellung ist.

3. Aufnahmeraum nach einem der vorangehenden Ansprüche, **dadurch gekennzeichnet, dass** die Verschiebeeinheit (90) darauf ausgelegt ist, den Verbinder (50) in eine zurückgezogene Stellung zu verschieben, in welcher der Verbinder (50) zugleich von dem Dorn (24) und von dem Transformator (44) elektrisch getrennt ist.

4. Aufnahmeraum nach einem der vorangehenden Ansprüche, **dadurch gekennzeichnet, dass** er einen Masseanschluss (130) enthält, der so positioniert ist, dass er automatisch den Verbinder (50) dann an die Masse anschließt, wenn dieser Verbinder in der zurückgezogenen Stellung ist.

5. Aufnahmeraum nach einem der vorangehenden Ansprüche, **dadurch gekennzeichnet, dass** der Verbinder (50) einen ersten Kontakt (58) enthält, der dazu geeignet ist, an den Dorn (24) angeschlossen zu werden, sowie einen zweiten Kontakt (60), der dazu geeignet ist, an den Transformator (44) angeschlossen zu werden, und dass der erste und der zweite Kontakt über eine Schmelzsicherung (70) elektrisch verbunden sind.

6. Aufnahmeraum nach Anspruch 5, **dadurch gekennzeichnet, dass** das aus elektrisch isolierendem Material bestehende Rohr (56) des Verbinders (50) als mechanischer Halter für den ersten und den zweiten Kontakt dient.

7. Aufnahmeraum nach einem der vorangehenden Ansprüche, **dadurch gekennzeichnet, dass** der Verbinder (50) einen Kragen (80) aus elektrisch isolierendem Material aufweist, dessen Umfang weiter ist als der Innenquerschnitt der Zugangsöffnung (52), und dass dieser Kragen (80) an einen Abschnitt des Verbinders (50) so befestigt ist, dass dieser Abschnitt dann in Anschlag an die Wand (40) gelangt, wenn der Verbinder in der zurückgezogenen Stellung ist.

8. Aufnahmeraum nach einem der vorangehenden Ansprüche, **dadurch gekennzeichnet, dass** er ein bewegliches Organ (92) aufweist, das dazu geeignet ist, den Transformator (44) unabhängig vom Verbinder (50) zwischen einer Betriebsstellung, in welcher der Transformator über den Verbinder (50) an den Dorn (24) angeschlossen werden kann, und einer ausgefahrenen Stellung zu verschieben, in welcher der Transformator (44) elektrisch von dem Dorn (24) getrennt ist.

9. Mittel- und/oder Hochspannungsverteilungszelle, die dazu bestimmt ist, zwischen einem Stromversorgungsnetz (12) für Mittel- und/oder Hochspannung angeschlossen zu werden, **dadurch gekennzeichnet, dass** sie
zumindest einen Aufnahmeraum (20) nach einem der vorangehenden Ansprüche aufweist.
